(19) Europäisches Patentamt
European Patent Office
Office européen des brevets

(11) **EP 3 509 987 B1**

(12) **FASCICULE DE BREVET EUROPEEN**

(45) Date de publication et mention
de la délivrance du brevet:
**28.04.2021 Bulletin 2021/17**

(21) Numéro de dépôt: **17732465.4**

(22) Date de dépôt: **27.06.2017**

(51) Int Cl.:
*C01B 25/22* *(2006.01)*        *C01B 25/32* *(2006.01)*
*C05B 7/00* *(2006.01)*        *C05B 11/12* *(2006.01)*
*A23L 33/16* *(2016.01)*

(86) Numéro de dépôt international:
**PCT/EP2017/065886**

(87) Numéro de publication internationale:
**WO 2018/002071 (04.01.2018 Gazette 2018/01)**

(54) **PROCEDE DE PREPARATION DE MONOHYDROGENOPHOSPHATE DE CALCIUM**

VERFAHREN ZUR HERSTELLUNG VON CALCIUMMONOHYDROGENPHOSPHAT

PROCESS FOR PRODUCING MONOHYDROGEN CALCIUM PHOSPHATE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats de validation désignés:
**MA**

(30) Priorité: **28.06.2016 BE 201605482**

(43) Date de publication de la demande:
**17.07.2019 Bulletin 2019/29**

(73) Titulaire: **Prayon S.A.**
**4480 Engis (BE)**

(72) Inventeurs:
• **THEYS, Tibaut**
**5340 Faulx-Les-Tombes (BE)**
• **HENRY, Thomas**
**3870 Heers (BE)**

(74) Mandataire: **Gevers Patents**
**Intellectual Property House**
**Holidaystraat 5**
**1831 Diegem (BE)**

(56) Documents cités:
**WO-A1-2010/043262        WO-A1-2015/082468
FR-A1- 2 273 760**

EP 3 509 987 B1

**Description**

La présente invention se rapporte à un procédé de préparation de monohydrogénophosphate de calcium ou de phosphate dicalcique comprenant les étapes de :

a) digestion en milieu aqueux, durant une première période de temps, d'une source de phosphate par un acide avec formation d'une pulpe comprenant une phase aqueuse contenant du phosphate de calcium en solution et une phase solide contenant des impuretés,

b) une première séparation entre ladite phase aqueuse contenant du phosphate de calcium en solution et ladite phase solide contenant des impuretés, durant une deuxième période de temps,

c) une neutralisation de ladite phase aqueuse contenant du phosphate de calcium en solution à un pH suffisant pour obtenir une précipitation dans un milieu aqueux de phosphate de calcium insoluble en tant que monohydrogénophosphate de calcium susdit, et

d) une deuxième séparation entre ledit milieu aqueux et ledit monohydrogénophosphate de calcium.

L'attaque d'une source de phosphate, comme du minerai de phosphate, par un acide est connue depuis de nombreuses années, par exemple des brevets US 3304157 et GB 105 15 21.

Le document WO 2004002888 divulgue un procédé de fabrication de monohydrogénophosphate de calcium (DCP) et également un procédé de production d'acide phosphorique à partir du DCP obtenu selon le procédé décrit dans ce document de brevet.

Ce document prévoit une attaque d'un minerai de phosphate dans une cuve de digestion par une solution d'acide chlorhydrique, présentant une concentration de l'ordre de 5 % en poids, pour former une pulpe comprenant une phase aqueuse contenant du phosphate de calcium et des ions chlorure en solution et une phase solide contenant des impuretés.

Le passage de la pulpe susmentionnée dans un filtre-presse permet de séparer la phase aqueuse contenant du phosphate de calcium et des ions chlorure en solution de la phase solide contenant des impuretés.

Une neutralisation de la phase aqueuse séparée contenant du phosphate de calcium et des ions chlorure est réalisée au moyen d'une addition d'un composé calcique pour faire précipiter le DCP insoluble dans la phase aqueuse, suite à une montée de pH.

Une séparation additionnelle est réalisée pour récupérer un gâteau humide de DCP en fin de procédé.

Concernant la production d'un acide phosphorique à l'aide du DCP ainsi obtenu, celle-ci est réalisée par une extraction liquide-liquide et nécessite plusieurs étapes de mise en œuvre.

Il est, en effet, nécessaire de réaliser une étape de solubilisation du gâteau humide de DCP, obtenu selon le procédé décrit précédemment, par une nouvelle attaque à l'acide chlorhydrique plus concentré pouvant aller jusqu'à 20 % en poids. Cette solubilisation permet la formation d'une solution aqueuse contenant des ions phosphate, des ions calcium et des ions chlorure, à extraire par un agent d'extraction organique.

Plus précisément, cette étape d'extraction est menée dans une colonne d'extraction au moyen d'un solvant organique et permet de produire une phase aqueuse d'extraction contenant des ions chlorure et des ions calcium et une phase organique d'extraction contenant de l'acide phosphorique.

La phase organique d'extraction contenant l'acide phosphorique est ré-extraite à l'aide d'un agent de réextraction aqueux de façon à isoler une phase aqueuse de réextraction contenant des ions phosphate.

Enfin, une concentration de la phase aqueuse de réextraction permet la formation d'une solution aqueuse d'acide phosphorique.

Ce procédé de production d'acide phosphorique est complexe et nécessite plusieurs étapes onéreuses pour fournir un acide phosphorique de qualité suffisante en vue des applications prévues.

Par ailleurs, l'utilisation de solvants d'extraction organique rend un tel procédé peu attractif en terme d'impact écologique.

Le document WO 2005 066 070 se rapporte à un procédé d'attaque de minerai de phosphate par une solution aqueuse d'acide chlorhydrique présentant une concentration en HCl inférieure à 10 % en poids, avec formation d'une pulpe constituée d'une phase aqueuse contenant du phosphate de calcium en solution et des ions chlorure et d'une phase solide insoluble contenant des impuretés.

Une neutralisation de la phase aqueuse précitée est réalisée à un premier pH auquel une part significative de phosphate de calcium est maintenue en phase aqueuse afin de faire précipiter des impuretés.

Ensuite, la phase solide insoluble précitée est séparée de la phase aqueuse tandis que les impuretés précipitées sont isolées.

Une neutralisation additionnelle de la phase aqueuse est effectuée à un second pH supérieur au premier pH susdit pour précipiter du DCP qui est ensuite séparé du milieu aqueux.

Ce procédé est limité par le fait qu'il faille utiliser une solution aqueuse d'acide chlorhydrique présentant une concentration inférieure à 10 % en poids.

Plus récemment, un procédé d'attaque d'une source de phosphate par une solution aqueuse d'acide chlorhydrique a fait l'objet de la demande de brevet WO 2015 082 468.

Selon cette divulgation, la digestion de la roche en présence de la solution aqueuse d'acide chlorhydrique permet de former une pulpe constituée d'une phase aqueuse contenant du phosphate de calcium et des ions chlorure en solution, et d'une phase solide insoluble contenant des impuretés.

La phase aqueuse est ensuite séparée de la phase solide par filtration pour que la phase aqueuse puisse être neutralisée à un pH suffisant afin de former un milieu aqueux comprenant des ions chlorure et afin de précipiter le phosphate de calcium sous forme dudit sel de phosphate. Une séparation ultérieure permet d'isoler le sel de phosphate.

Selon ce procédé, les étapes d'attaque et de filtration sont réalisées à une température comprise entre 50°C et 70°C et la première solution aqueuse d'acide chlorhydrique présente une concentration en HCl inférieure ou égale à 15% en poids.

Malheureusement, les procédés connus sont peu pratiques pour les industriels étant donné qu'ils ne présentent pas un rendement d'extraction en $P_2O_5$ qui soit suffisant par rapport à la quantité de $P_2O_5$ présente dans la source de phosphate de départ et que le sel de phosphate obtenu n'est pas suffisamment pur, ce qui détermine pourtant son potentiel d'utilisation dans plusieurs domaines d'application, comme l'agriculture ou l'alimentaire et les applications techniques à haute valeur ajoutée.

Il existe donc un réel besoin de fournir un procédé pour fabriquer du monohydrogénophosphate de calcium qui résolve en finalité cette problématique liée à la pureté du monohydrogénophosphate de calcium, tout en limitant les pertes en $P_2O_5$ dans les déchets générés par le procédé dans le but d'améliorer les performances générales du procédé.

L'invention a pour but de procurer un procédé de fabrication du monohydrogénophosphate de calcium qui puisse être simple à mettre en œuvre, fiable et rapide. La digestion et la filtration doivent permettre un rendement d'extraction élevé en $P_2O_5$, tout en tenant dûment compte du compromis entre le degré de pureté souhaité du monohydrogénophosphate de calcium obtenu en fin de procédé et la limitation des pertes de $P_2O_5$.

Pour résoudre ce problème, il est prévu suivant l'invention un procédé tel qu'indiqué au début, caractérisé en ce que ladite première période de temps de ladite étape a) de digestion est supérieure à ladite deuxième période de temps de l'étape b) de première séparation susdite.

De manière surprenante, il a été constaté que lorsque l'étape a) de digestion présente une période de temps supérieure à la période de temps liée à l'étape b) de première séparation susvisée, le procédé présente un rendement en $P_2O_5$ intéressant, tout en garantissant au DCP un degré de pureté optimal en vue des applications visées dans le domaine de l'agriculture et de l'alimentaire.

Plus précisément, il est apparu que ladite période de temps de ladite étape a) de digestion qui est supérieure à celle de l'étape b) de première séparation permet de réduire considérablement la période de temps liée à la première séparation. Cela est particulièrement avantageux en ce que l'étape de première séparation n'est plus contraignante pour l'utilisateur étant donné qu'elle n'implique plus qu'un nettoyage réduit du moyen de séparation, tel un filtre, pouvant être utilisé pour réaliser une filtration, correspondant à ladite première séparation. De cette façon, l'étape de première séparation est rapide et efficace. Cela a pour conséquence que le procédé suivant la présente invention est suffisamment rentable étant donné qu'il ne nécessite pas de lavage répété et conséquent du moyen de séparation.

En pratique, que ce soit selon un processus en continu ou discontinu, ces avantages fournis par le procédé diminuent nettement la surface de filtration nécessaire. Ainsi, l'étape de première séparation est plus simple et plus efficace ce qui permet en finalité de fournir un procédé plus rentable que les procédés connus de l'état de la technique.

On remarque d'ailleurs que plus l'étape de digestion est effectuée pendant une période de temps longue, plus l'étape de première séparation peut avoir lieu pendant une période de temps courte.

Comme expliqué, le monohydrogénophosphate de calcium obtenu selon le procédé de la présente invention peut être utilisé dans le domaine de l'agriculture, de l'alimentaire ou encore dans une composition destinée à l'agriculture ou à l'alimentaire. Le domaine de l'agriculture inclut notamment les fertilisants, comme les engrais. Il peut également être destiné à la production d'acide phosphorique.

Ainsi, il a été constaté que le procédé selon l'invention permet d'obtenir un rendement d'extraction en $P_2O_5$ pour les étapes a et b susvisées qui peut aller jusqu'à 95 % et permet de fournir un produit final qui présente un degré de pureté tel qu'il convient à une utilisation de qualité dans le domaine de l'alimentaire ou de l'agriculture, comme les fertilisants.

Avantageusement, les étapes a) et b) susdites sont réalisées en une durée inférieure à 2 heures, de préférence une durée comprise entre 30 et 100 minutes, de préférence entre 30 et 70 minutes, plus préférentiellement entre 40 et 65 minutes.

Le fait que le procédé selon l'invention comprenne une combinaison de paramètres suivant laquelle les étapes a) et b) sont réalisées en une durée inférieure à 2 heures et la période de temps liée à l'étape a) susdite de digestion est supérieure à la période de temps liée à l'étape b) de première séparation susvisée permet de fournir un procédé encore plus rentable et plus efficace en terme de rendement d'extraction en $P_2O_5$ par rapport à l'état de la technique.

Plus avantageusement encore, ladite période de temps prédéterminée de ladite étape a) est comprise entre 75 et 100 minutes, de préférence entre 80 et 95 minutes, ou entre 20 et 45 minutes, en particulier entre 24 et 40 minutes, préférentiellement entre 30 et 35 minutes.

Selon un exemple de réalisation avantageux, ladite première séparation de ladite étape b) est réalisée à une vitesse de filtration d'au moins 0,1 tonne de $P_2O_5/\sqrt{\Delta P}/m^2/jour$, de préférence comprise entre 0,1 et 5 tonnes de $P_2O_5/\sqrt{\Delta P}/m^2/jour$, plus préférentiellement comprise entre 0,15 et 3 tonnes de $P_2O_5/\sqrt{\Delta P}/m^2/jour$, plus préférentiellement encore comprise entre 0,3 et 0,9, en particulier entre 0,4 et 0,7, tonne de $P_2O_5/\sqrt{\Delta P}/m^2/jour$, ladite vitesse de filtration étant calculée suivant l'équation suivante :

$$Vitesse\ de\ filtration = \frac{Q_{P2O5}}{\sqrt{\Delta P}\ \Omega\ T_f}$$

où,

$Q_{P2O5}$ correspond la quantité de $P_2O_5$ recueillie dans le filtrat et est exprimée en tonne,
$\Omega$ est la surface du filtre exprimée en $m^2$,
$\Delta P$ est la différence entre la pression de sortie du filtrat et la pression appliquée à la pulpe au moment de ladite première séparation et est exprimée en bar, et
$T_f$ est la période de temps de ladite première séparation et est exprimée en jour.

La vitesse de filtration indiquée ci-dessus est calculée, d'une manière connue de l'homme de métier, comme décrit notamment dans Albert Rushton, Anthony S. Ward et Richard G. Holdich, Solid-Liquid Filtration and Separation Technology, p. 35-93, ed. John Wiley & Sons, 2008.

Il a été constaté que le procédé suivant l'invention permet également de réaliser ladite étape b) de première séparation à une vitesse de filtration qui est particulièrement avantageuse en ce qu'elle permet, à la fois, de réduire les durées de filtration, tout en n'augmentant pas la taille du filtre, ce qui est requis pour une application industrielle.

De plus, d'une manière surprenante, il est apparu qu'il était possible d'obtenir d'une manière simple un rendement d'extraction en $P_2O_5$ pour les étapes a et b supérieur à 90 % en poids, de préférence supérieur à 93 % en poids, avantageusement supérieur à 95 %, en appliquant des vitesses de filtration rapides et économiques à l'échelle industrielle.

Selon un mode préféré, ladite source de phosphate et ledit acide sont introduits dans un premier réacteur comprenant ledit milieux aqueux simultanément ou successivement, afin de réaliser ladite étape a) de digestion, et ladite pulpe comprenant ladite phase aqueuse contenant du phosphate de calcium en solution et ladite phase solide contenant des impuretés est transférée du premier réacteur à un moyen de séparation pour mettre en œuvre ladite première séparation reprise à l'étape b) de première séparation susdite.

Plus préférentiellement, ledit moyen de séparation est situé entre ledit premier réacteur et un deuxième réacteur.

Encore plus préférentiellement, ledit moyen de séparation est présent dans un deuxième réacteur dans lequel est introduite ladite pulpe comprenant une phase aqueuse contenant du phosphate de calcium en solution et une phase solide contenant des impuretés, pour mettre en œuvre ladite première séparation reprise à l'étape b) susdite.

De plus, ledit moyen de séparation peut préférentiellement être un filtre choisi dans le groupe constitué d'un filtre rotatif, de préférence à cellules basculantes, filtre-presse, filtre à bande et filtre tambour.

Selon un mode préféré, ledit acide est choisi dans le groupe constitué de l'acide chlorhydrique (HCl), de l'acide nitrique, de l'acide sulfurique, de l'acide phosphorique et de leurs mélanges.

De manière avantageuse, ledit acide est une solution aqueuse d'acide, notamment d'acide chlorhydrique, présentant une concentration en acide inférieure ou égale à 15% en poids.

Plus préférentiellement encore, les étapes a) et b) sont effectuées à une température comprise entre 50°C et 70°C, de préférence égale à 60°C.

De préférence, ladite source de phosphate est choisie dans le groupe constitué d'une roche de phosphate, d'un minerai de phosphate, de sources de phosphate secondaires, telles que des cendres (par exemple issues de boues de station d'épuration ou d'os ou de lisiers de porcs) ou de leurs mélanges.

Avantageusement, l'étape de neutralisation est réalisée au moyen d'un agent de neutralisation choisi dans le groupe constitué des composés à base de calcium, tels que de l'oxyde, de l'hydroxyde et du carbonate de calcium et les sels de calcium hydrosolubles et l'hydroxyde.

D'autres formes de réalisation du procédé suivant l'invention sont indiquées dans les revendications annexées.

La présente divulgation présente aussi l'utilisation du monohydrogénophosphate de calcium obtenu selon la présente invention pour produire de l'acide phosphorique.

Une telle production d'acide phosphorique peut impliquer une attaque du monohydrogénophosphate de calcium obtenu avec de l'acide sulfurique.

De préférence, le monohydrogénophosphate de calcium obtenu selon le procédé suivant la présente invention est utilisé dans l'industrie alimentaire ou dans le domaine agricole ou horticole.

D'autres formes de réalisation de l'utilisation suivant l'invention sont indiquées dans les revendications annexées.

D'autres caractéristiques, détails et avantages du procédé et de l'utilisation ressortiront de la description donnée ci-après, à titre non limitatif.

Dans le cadre de la présente invention, l'expression « une digestion est réalisée durant une première période de temps» doit être comprise comme signifiant que la digestion se termine au moment où l'étape de première séparation est initiée, ce qui correspond au moment où la pulpe est introduite dans un moyen de séparation, tel un filtre.

Dans le cadre de la présente invention, l'expression « première séparation réalisée durant une deuxième période de temps » doit être comprise comme signifiant que la durée liée à cette première séparation est déterminée à partir du moment où la pulpe à filtrer est introduite dans un moyen de séparation, tel un filtre.

Selon un exemple pratique, un minerai de phosphate et une solution aqueuse d'acide chlorhydrique sont introduits simultanément ou successivement dans un milieu aqueux contenu dans un premier réacteur.

Après digestion durant une première période de temps, une pulpe est obtenue dans le premier réacteur et est introduite dans un moyen de séparation en vue de réaliser l'étape b) de première séparation durant une deuxième période de temps qui est inférieure à celle correspondant à l'étape a) de digestion.

Ce moyen de séparation peut être présent dans le premier réacteur ou dans un second réacteur.

Lorsque le moyen de séparation est présent dans le premier réacteur, celui-ci peut être en communication fluidique avec ce réacteur.

Ainsi, la durée prédéterminée de digestion se termine à partir du moment où la pulpe est introduite dans le moyen de séparation.

Le moyen de séparation peut aussi être présent dans un deuxième réacteur éventuellement en communication fluidique avec le premier réacteur.

Il est également possible de faire appel à un premier réacteur, à un deuxième réacteur et à un moyen de séparation qui peut être disposé entre lesdits premier et deuxième réacteurs de sorte à être en communication fluidique avec ces derniers.

Dans tous les cas de figure précités, ladite source de phosphate présente un temps de séjour, dans ledit premier réacteur, supérieur au temps de séjour de ladite pulpe dans ledit moyen de séparation, pulpe constituée d'une phase aqueuse comprenant du phosphate de calcium et d'une phase solide insoluble contenant des impuretés.

Dans le cadre de la présente invention, le procédé peut être réalisé de manière continue ou discontinue.

L'étape de neutralisation de ladite phase aqueuse comprenant du phosphate de calcium et des ions chlorure en solution, lorsque l'attaque est effectuée à l'acide chlorhydrique, est réalisée à un pH suffisant pour précipiter le phosphate de calcium sous forme dudit monohydrogénophosphate de calcium.

Une deuxième séparation est prévue entre ledit milieu aqueux comprenant les ions chlorures et le monohydrogénophosphate de calcium de façon à fournir le monohydrogénophosphate de calcium obtenu par le procédé suivant la présente invention.

Les étapes de neutralisation et de deuxième séparation sont connues de l'homme de l'art, notamment du document WO 2015 082 468.

**Exemple 1**

On part d'un minerai de phosphate présentant les caractéristiques du tableau 1 suivant :

| Quantité de phosphate | | 1000,0 g |
|---|---|---|
| Humidité | 1,93 % | 19,3 g |
| CaO | 48,90 % | 489,0 g |
| $P_2O_5$ | 31,00 % | 310,0 g |

Une quantité de 120,8 g d'eau déminéralisée est introduite dans un berlin et ensuite une quantité de 75 g de phosphate du tableau 1 est ajoutée à l'eau déminéralisée, sous agitation, pour former un mélange. Le berlin est ensuite couvert d'un verre de montre et le mélange est amené à une température de 60°C.

A une solution aqueuse d'acide chlorhydrique, qui présente une concentration en HCl de 37 %, on mélange 120,8 g d'eau déminéralisée, de manière à obtenir 357,7 g d'une solution aqueuse d'HCl à 12 %. Cette dernière est ensuite ajoutée au mélange chaud de phosphate et d'eau déminéralisée.

La durée de digestion est mesurée à compter du moment où la solution aqueuse d'acide dilué est ajoutée au mélange chaud contenant le phosphate et l'eau déminéralisée.

Après un temps de digestion de 30 minutes, la solution ainsi obtenue est filtrée, à une température de filtration de 60°C, au moyen d'un filtre en fibre de polyester ayant un diamètre de 90 mm et une épaisseur de 0,17 mm disposé sur un équipement de type Buchner préalablement mis sous vide.

La pression de filtration utilisée est 0,4 bar, ce qui représente une différence de pression motrice de 0,6 bar par rapport à la pression atmosphérique de 1 bar.

La durée de filtration correspond au temps nécessaire pour obtenir un gâteau humide à partir de la pulpe formée lors des étapes précédentes. Après la filtration, le gâteau est soumis à une étape de séchage au cours de laquelle l'air ambiant est aspiré au travers du gâteau, l'étape de séchage durant 5 minutes. Selon ce premier exemple de réalisation, la durée de filtration est de 5 minutes.

Le poids du gâteau humide obtenu est ensuite mesuré ainsi que le poids du filtrat. Les filtrats et le gâteau sont ensuite soumis à l'analyse.

Le gâteau humide est ensuite séché à une température de 60°C et son poids, après séchage, est également mesuré.

**Tableau 2**

| Exemple 1 | |
|---|---|
| Quantité de phosphate de départ | 75 grammes |
| Quantité de la solution aqueuse d'HCl 12% | 357,7 grammes |
| Température de digestion du minerai | 60°C |
| Temps de digestion | 30 minutes |
| Température de filtration | 60°C |
| Temps de filtration | 5 minutes |
| Vitesse de filtration | 1,3 tonne de $P_2O_5$/m²/√ΔP/jour |

Le rendement en $P_2O_5$ dans le produit final obtenu après les étapes a et b en fin de de procédé est égal à 94,03 %. Le rendement est calculé sur base de la quantité de $P_2O_5$ présente dans le minerai de phosphate. Il représente le pourcentage de $P_2O_5$ dans le filtrat après l'étape de première séparation b par rapport à cette quantité.

**Exemple 2**

Cet exemple est réalisé dans les mêmes conditions opératoires que celles décrites à l'exemple 1, à l'exception du fait que le temps de digestion est de 45 minutes et la durée de filtration est de 5,5 minutes, comme illustré au tableau 3 ci-dessous.

**Table 3**

| Exemple 2 | |
|---|---|
| Quantité de phosphate de départ | 75 grammes |
| Quantité de la solution aqueuse d'HCl 12% | 357,7 grammes |
| Température de digestion du minerai | 60°C |
| Temps de digestion | 45 minutes |
| Température de filtration | 60°C |
| Temps de filtration | 5,5 minutes |
| Vitesse de filtration | 1,1 tonne de $P_2O_5$/m²/√ΔP/jour |

Le rendement en $P_2O_5$ après les étapes a et b du procédé est de 93,02 %.

**Exemple 3**

Cet exemple est réalisé dans les mêmes conditions opératoires que celles décrites à l'exemple 1, à l'exception du fait que le temps de digestion est de 60 minutes et que la durée de filtration est de 4,75 minutes, comme illustré au tableau 4 ci-dessous.

**Tableau 4**

| Exemple 3 | |
|---|---|
| Quantité de phosphate de départ | 75 grammes |
| Quantité de la solution aqueuse d'HCl 12% | 357,7 grammes |
| Température de digestion du minerai | 60°C |
| Temps de digestion | 60 minutes |
| Température de filtration | 60°C |
| Temps de filtration | 4,75 minutes |
| Vitesse de filtration | 1,3 tonnes de $P_2O_5$/m$^2$/$\sqrt{\Delta P}$/jour |

Le rendement en $P_2O_5$ dans le produit après les étapes a et b du procédé est de 93,16 %.

**Exemple 4**

Cet exemple est réalisé dans les mêmes conditions opératoires que celles décrites à l'exemple 1, à l'exception du fait que le temps de digestion est de 90 minutes et la durée de filtration est de 2,33 minutes, comme illustré au tableau 5 ci-dessous.

**Tableau 5**

| Exemple 4 | |
|---|---|
| Quantité de phosphate de départ | 75 grammes |
| Quantité de la solution aqueuse d'HCl 12% | 357,7 grammes |
| Température de digestion du minerai | 60°C |
| Temps de digestion | 90 minutes |
| Température de filtration | 60°C |
| Temps de filtration | 2,33 minutes |
| Vitesse de filtration | 2,7 tonnes de $P_2O_5$/m$^2$/$\sqrt{\Delta P}$/jour |

Le rendement en $P_2O_5$ dans le produit obtenu après les étapes a et b du procédé est de 91,96 %.

**Exemple 5**

Cet exemple est réalisé dans les mêmes conditions opératoires que celles décrites à l'exemple 1, à l'exception du fait que le temps de digestion est de 21,5 minutes et la durée de filtration est de 9 minutes, comme illustré au tableau 6 ci-dessous.

**Tableau 6**

| Exemple 5 | |
|---|---|
| Quantité de phosphate de départ | 75 grammes |
| Quantité de la solution aqueuse d'HCl 12% | 357,7 grammes |
| Température de digestion du minerai | 60°C |

(suite)

| Exemple 5 | |
|---|---|
| Temps de digestion | 21,5 minutes |
| Température de filtration | 60°C |
| Temps de filtration | 9 minutes |
| Vitesse de filtration | 0,7 tonne de $P_2O_5/m^2/\sqrt{\Delta P}$/jour |

Le rendement en $P_2O_5$ dans le produit obtenu après les étapes a et b du procédé est de 96,09 %.

## Exemple 6

Cet exemple est réalisé dans les mêmes conditions opératoires que celles décrites à l'exemple 1, à l'exception du fait que le temps de digestion est de 26,33 minutes et la durée de filtration est de 7,33 minutes, comme illustré au tableau 7 ci-dessous.

**Tableau 7**

| Exemple 6 | |
|---|---|
| Quantité de phosphate de départ | 75 grammes |
| Quantité de la solution aqueuse d'HCl 12% | 357,7 grammes |
| Température de digestion du minerai | 60°C |
| Temps de digestion | 26,33 minutes |
| Température de filtration | 60°C |
| Temps de filtration | 7,33 minutes |
| Vitesse de filtration | 71,8 tonne de $P_2O_5/m^2/\sqrt{\Delta P}$/jour |

Le rendement en $P_2O_5$ dans le produit obtenu après les étapes a et b du procédé est de 95,85 %.

## Revendications

1.   Procédé de préparation de monohydrogénophosphate de calcium comprenant les étapes de:

     a) digestion en milieu aqueux, durant une première période de temps, d'une source de phosphate par un acide avec formation d'une pulpe comprenant une phase aqueuse contenant du phosphate de calcium en solution et une phase solide contenant des impuretés,
     b) une première séparation entre ladite phase aqueuse contenant du phosphate de calcium en solution et ladite phase solide contenant des impuretés, durant une deuxième période de temps,
     c) une neutralisation de ladite phase aqueuse contenant du phosphate de calcium en solution à un pH suffisant pour obtenir une précipitation dans un milieu aqueux de phosphate de calcium insoluble en tant que monohydrogénophosphate de calcium susdit, et
     d) une deuxième séparation entre ledit milieu aqueux et ledit monohydrogénophosphate de calcium,

     **caractérisé en ce que** ladite première période de temps de ladite étape a) de digestion est supérieure à ladite deuxième période de temps de l'étape b) susdite.

2.   Procédé selon la revendication 1, dans lequel les étapes a) et b) susdites sont réalisées en une durée inférieure à 2 heures, de préférence une durée comprise entre 30 et 100 minutes, de préférence entre 30 et 70 minutes, plus préférentiellement entre 40 et 65 minutes.

3.   Procédé selon la revendication 1, dans lequel ladite première période de temps de ladite étape a) est comprise entre 75 et 100 minutes, de préférence entre 80 et 95 minutes, ou entre 20 et 45 minutes, en particulier 24 et 40 minutes, préférentiellement entre 30 et 35 minutes.

4. Procédé selon l'une quelconque des revendications précédentes, dans lequel ladite première séparation de ladite étape b) est réalisée à une vitesse de filtration d'au moins 0,1 tonne de $P_2O_5/\sqrt{\Delta P}/m^2$/jour, de préférence comprise entre 0,1 et 5 tonnes de $P_2O_5/\sqrt{\Delta P}/m^2$/jour, plus préférentiellement comprise entre 0,15 et 3 tonnes de $P_2O_5/\sqrt{\Delta P}/m^2$/jour, plus préférentiellement encore comprise entre 0,3 et 0,9, en particulier entre 0,4 et 0,7 tonne de $P_2O_5/\sqrt{\Delta P}/m^2$/jour, ladite vitesse de filtration étant calculée suivant l'équation suivante :

$$Vitesse\ de\ filtration = \frac{Q_{P2O5}}{\sqrt{\Delta P}\ \Omega\ T_f}$$

où,

$Q_{P2O5}$ correspond la quantité de $P_2O_5$ recueillie dans le filtrat et est exprimée en tonne,
$\Omega$ est la surface du filtre exprimée en $m^2$,
$\Delta P$ est la différence entre la pression de sortie du filtrat et la pression appliquée à la pulpe au moment de ladite première séparation et est exprimée en bar, et
$T_f$ est la première période de temps de ladite première séparation et est exprimée en jour.

5. Procédé selon l'une quelconque des revendications précédentes, dans lequel ladite source de phosphate et ledit acide sont introduits dans un premier réacteur comprenant ledit milieux aqueux simultanément ou successivement, afin de réaliser ladite étape a) de digestion et dans lequel ladite pulpe comprenant ladite phase aqueuse contenant du phosphate de calcium en solution et ladite phase solide contenant des impuretés est transférée du premier réacteur à un moyen de séparation pour mettre en œuvre ladite première séparation reprise à l'étape b) susdite.

6. Procédé selon la revendication 5, dans lequel ledit moyen de séparation est situé entre ledit premier réacteur et un deuxième réacteur.

7. Procédé selon la revendication 5, dans lequel ledit moyen de séparation est présent dans un deuxième réacteur dans lequel est introduite ladite pulpe comprenant une phase aqueuse contenant du phosphate de calcium en solution et une phase solide contenant des impuretés, pour mettre en œuvre ladite première séparation reprise à l'étape b) susdite.

8. Procédé selon l'une quelconque des revendications 5 à 7, dans lequel ledit moyen de séparation est un filtre choisi dans le groupe constitué d'un filtre rotatif, de préférence à cellules basculantes, filtre presse, filtre à bande et filtre tambour.

9. Procédé selon l'une quelconque des revendications précédentes, dans lequel ledit acide est choisi dans le groupe constitué de l'acide chlorhydrique, de l'acide nitrique, de l'acide sulfurique, de l'acide phosphorique et de leurs mélanges.

10. Procédé selon la revendication 9, dans lequel ledit acide est une solution aqueuse d'acide présentant une concentration en acide inférieure ou égale à 15% en poids, de préférence dans ledit premier réacteur.

11. Procédé selon l'une quelconque des revendications précédentes, dans lequel les étapes a) et b) sont effectuées à une température comprise entre 50°C et 70°C, de préférence égale à 60°C.

12. Procédé selon l'une quelconque des revendications précédentes, dans lequel ladite source de phosphate est choisie dans le groupe constitué d'une roche de phosphate, d'un minerai de phosphate, de sources de phosphate secondaires telles que des cendres, en particulier issues de boues de station d'épuration ou d'os ou de lisiers de porcs, ou de leurs mélanges.

13. Procédé selon l'une quelconque des revendications précédentes, dans lequel l'étape de neutralisation est réalisée au moyen d'un agent de neutralisation choisi dans le groupe constitué des composés à base de calcium tels que de l'oxyde, de l'hydroxyde et du carbonate de calcium et des sels de calcium hydrosolubles, et leurs mélanges.

**Patentansprüche**

1. Verfahren zur Herstellung von Calciummonohydrogenphosphat, umfassend die Schritte:

   a) Aufschluss einer Phosphatquelle im wässrigen Medium während einer ersten Zeitdauer durch eine Säure mit Bildung einer Pulpe, die eine wässrige Phase, die Calciumphosphat in Lösung enthält, und eine feste Phase umfasst, die Verunreinigungen enthält,
   b) eine erste Trennung zwischen der wässrigen Phase, die Calciumphosphat in Lösung enthält, und der festen Phase, die Verunreinigungen enthält, während einer zweiten Zeitdauer;
   c) Neutralisation der wässrigen Phase, die Calciumphosphat in Lösung enthält, bei einem pH-Wert, der ausreicht, um eine Ausfällung von unlöslichem Calciumphosphat in einem wässrigen Medium als das oben genannte Calciummonohydrogenphosphat zu erhalten, und
   d) eine zweite Trennung zwischen dem wässrigen Medium und dem Calciummonohydrogenphosphat,

   **dadurch gekennzeichnet, dass** die erste Zeitdauer des Aufschlussschritts a) größer als die zweite Zeitdauer des oben genannten Schritts b) ist.

2. Verfahren nach Anspruch 1, wobei die oben genannten Schritte a) und b) in einem Zeitraum von weniger als 2 Stunden, vorzugsweise einem Zeitraum zwischen 30 und 100 Minuten, vorzugsweise zwischen 30 und 70 Minuten, bevorzugter zwischen 40 und 65 Minuten, durchgeführt werden.

3. Verfahren nach Anspruch 1, wobei die erste Zeitdauer des Schritts a) zwischen 75 und 100 Minuten, vorzugsweise zwischen 80 und 95 Minuten oder zwischen 20 und 45 Minuten, insbesondere zwischen 24 und 40 Minuten, vorzugsweise zwischen 30 und 35 Minuten, liegt.

4. Verfahren nach einem der vorstehenden Ansprüche, wobei die erste Trennung des Schritts b) bei einer Filtrationsgeschwindigkeit von mindestens 0,1 Tonnen $P_2O_5/\sqrt{\Delta P}/m^2$/Tag, vorzugsweise zwischen 0,1 und 5 Tonnen $P_2O_5/\sqrt{\Delta P}/m^2$/Tag, bevorzugter zwischen 0,15 und 3 Tonnen $P_2O_5/\sqrt{\Delta P}/m^2$/Tag, bevorzugter zwischen 0,3 und 0,9, insbesondere zwischen 0,4 und 0,7 Tonnen $P_2O_5/\sqrt{\Delta P}/m^2$/Tag, durchgeführt wird, wobei die Filtrationsgeschwindigkeit gemäß der folgenden Gleichung berechnet wird:

$$Filtrationsgeschwindigkeit = \frac{Q_{P2O5}}{\sqrt{\Delta P}\,\Omega\,T_f},$$

wobei

$Q_{P2O5}$ der im Filtrat gesammelten Menge an $P_2O_5$ entspricht und in Tonnen ausgedrückt wird,
$\Omega$ die Fläche des Filters, ausgedrückt in $m^2$, ist,
$\Delta P$ die Differenz zwischen dem Auslassdruck des Filtrats und dem Druck ist, der zum Zeitpunkt der ersten Trennung auf die Pulpe ausgeübt wird, und in bar ausgedrückt wird, und
$T_f$ die erste Zeitdauer der ersten Trennung ist und in Tagen ausgedrückt wird.

5. Verfahren nach einem der vorstehenden Ansprüche, wobei die Phosphatquelle und die Säure in einen ersten Reaktor, der das wässrige Medium umfasst, gleichzeitig oder nacheinander eingeführt werden, um den Aufschlussschritt a) durchzuführen, und wobei die Pulpe, die die wässrige Phase, die Calciumphosphat als Lösung enthält, und die feste Phase umfasst, die Verunreinigungen enthält, von dem ersten Reaktor zu einem Trennmittel übergeführt wird, um die erste Trennung auszuführen, die im oben genannten Schritt b) fortgeführt wird.

6. Verfahren nach Anspruch 5, wobei sich das Trennmittel zwischen dem ersten Reaktor und einem zweiten Reaktor befindet.

7. Verfahren nach Anspruch 5, wobei das Trennmittel in einem zweiten Reaktor vorhanden ist, in dem die Pulpe eingeführt ist, die eine wässrige Phase, die Calciumphosphat in Lösung enthält, und eine feste Phase umfasst, die Verunreinigungen enthält, um die erste Trennung auszuführen, die im oben genannten Schritt b) fortgeführt wird.

8. Verfahren nach einem der Ansprüche 5 bis 7, wobei das Trennmittel ein Filter ist, der aus der Gruppe ausgewählt ist, die aus einem Rotationsfilter, vorzugsweise mit Kippzellen, einer Filterpresse, einem Bandfilter und einem Trommelfilter besteht.

9.  Verfahren nach einem der vorstehenden Ansprüche, wobei die Säure aus der Gruppe ausgewählt ist, die aus Salzsäure, Salpetersäure, Schwefelsäure, Phosphorsäure und Gemischen davon besteht.

10. Verfahren nach Anspruch 9, wobei die Säure eine wässrige Säurelösung, die eine Säurekonzentration von weniger als oder gleich 15 Gew.-% vorweist, vorzugsweise in dem ersten Reaktor, ist.

11. Verfahren nach einem der vorstehenden Ansprüche, wobei die Schritte a) und b) bei einer Temperatur zwischen 50 °C und 70 °C, vorzugsweise gleich 60 °C, durchgeführt werden.

12. Verfahren nach einem der vorstehenden Ansprüche, wobei die Phosphatquelle aus der Gruppe ausgewählt ist, die aus Phosphatgestein, Phosphaterz, sekundären Phosphatquellen wie Aschen, insbesondere von Klärschlamm aus der Abwasserbehandlung oder aus Knochen oder Gülle von Schweinen oder Mischungen davon stammt.

13. Verfahren nach einem der vorstehenden Ansprüche, wobei der Neutralisationsschritt mittels eines Neutralisationsmittels durchgeführt wird, das aus der Gruppe ausgewählt ist, die aus Verbindungen auf Basis von Calcium wie Calciumoxid, -hydroxid und -carbonat und wasserlöslichen Calciumsalzen und Mischungen davon besteht.

**Claims**

1.  A method for preparing calcium monohydrogen phosphate comprising the steps of:

    a) digesting in an aqueous medium, for a first period of time, a source of phosphate using an acid, with a pulp being formed comprising an aqueous phase containing calcium phosphate in solution and a solid phase containing impurities,
    b) a first separation between said aqueous phase containing calcium phosphate in solution and said solid phase containing impurities, for a second period of time,
    c) neutralizing said aqueous phase containing calcium phosphate in solution to a pH sufficient to obtain a precipitation in an aqueous medium of calcium phosphate insoluble as said calcium monohydrogen phosphate, and
    d) a second separation between said aqueous medium and said calcium monohydrogen phosphate,

    **characterised in that** said first period of time of said step a) of digestion is greater than said second period of time of said step b) above.

2.  The method according to claim 1, wherein the above steps a) and b) are carried out for a duration of less than 2 hours, preferably a duration between 30 and 100 minutes, preferably between 30 and 70 minutes, more preferably between 40 and 65 minutes.

3.  The method according to claim 1, wherein said first period of time of said step a) is between 75 and 100 minutes, preferably between 80 and 95 minutes, or between 20 and 45 minutes, in particular 24 and 40 minutes, more preferably between 30 and 35 minutes.

4.  The method according to any one of the preceding claims, wherein said first separation of said step b) is carried out at a filtration rate of at least 0.1 tonnes of $P_2O_5\sqrt{\Delta P}/m^2$/day, preferably between 0.1 and 5 tonnes of $P_2O_5/\sqrt{\Delta P}/m^2$/day, more preferably between 0.15 and 3 tonnes of $P_2O_5/\sqrt{\Delta P}/m^2$/day, more preferably still between 0.3 and 0.9, in particular between 0.4 and 0.7 tonnes of $P_2O_5/\sqrt{\Delta P}/m^2$/day, said filtration rate being calculated according to the following equation:

$$Filtration\ rate = \frac{Q_{P2O5}}{\sqrt{\Delta P}\ \Omega\ T_f}$$

wherein

$Q_{P2O5}$ corresponds to the quantity of $P_2O_5$ collected in the filtrate and is expressed in tonnes,

$\Omega$ is the surface area of the filter expressed in $m^2$,

$\Delta$P is the difference between the outlet pressure of the filtrate and the pressure applied to the pulp at the time of said first separation and is expressed in bar, and

$T_f$ is the first period of time of said first separation and is expressed in days.

5. The method according to any one of the preceding claims, wherein said source of phosphate and said acid are introduced into a first reactor comprising said aqueous media simultaneously or successively, in order to carry out said digestion step a) and wherein said pulp comprising said aqueous phase containing calcium phosphate in solution and said solid phase containing impurities is transferred from the first reactor to a separation means for carrying out said first separation taken up in step b) above.

6. The method according to claim 5, wherein said separation means is located between said first reactor and a second reactor.

7. The method according to claim 5, wherein said separation means is present in a second reactor wherein said pulp comprising an aqueous phase containing calcium phosphate in solution and a solid phase containing impurities is introduced, to carry out said first separation in step b) above.

8. The method according to any one of claims 5 to 7, wherein said separation means is a filter selected from the group consisting of a rotary filter, preferably with tilting pan, press filter, band filter and drum filter.

9. The method according to any one of the preceding claims, wherein said acid is selected from the group consisting of hydrochloric acid, nitric acid, sulfuric acid, phosphoric acid and mixtures thereof.

10. The method according to claim 9, wherein said acid is an aqueous acid solution having an acid concentration of less than or equal to 15% by weight, preferably in said first reactor.

11. The method according to any one of the preceding claims, wherein steps a) and b) are carried out at a temperature of between 50°C and 70°C, preferably equal to 60°C.

12. The method according to any one of the preceding claims, wherein said source of phosphate is selected from the group consisting of a phosphate rock, a phosphate ore, sources of secondary phosphate such as ashes, in particular from sewage plant sludge or pig slurry or bones, or mixtures thereof.

13. The method according to any one of the preceding claims, wherein the neutralization step is carried out by means of a neutralizing agent selected from the group consisting of calcium-based compounds such as calcium oxide, hydroxide and carbonate and water-soluble calcium salts, and mixtures thereof.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3304157 A
- GB 1051521 A
- WO 2004002888 A
- WO 2005066070 A
- WO 2015082468 A

**Littérature non-brevet citée dans la description**

- **ALBERT RUSHTON ; ANTHONY S. WARD ; RICHARD G. HOLDICH.** Solid-Liquid Filtration and Separation Technology. 2008, 35-93